# EUROPEAN PATENT SPECIFICATION

(11) **EP 0 665 547 B1**
(45) Date of publication and mention of the grant of the patent: **19.12.2001**
(21) Application number: 95300541.0
(22) Date of filing: 27.01.1995
(51) Int. Cl.: G11B 20/10, H04B 1/66

(54) **Encoding and decoding system**
System zum Kodieren und Dekodieren
Système de codage et de décodage

(30) Priority: 28.01.1994 KR 9401577
(43) Date of publication of application: 02.08.1995
(73) Proprietor: Samsung Electronics Co., Ltd., Suwon-city, Kyungki-do 441-370 (KR)
(72) Inventor: Kim, Seoung-bong, Samsung Electronics Co., Ltd., Suwon-city, Kyungki-do (KR)
(74) Representative: Chugg, David John

(56) References cited:
- EP-A- 0 376 553
- EP-A- 0 559 383
- EP-A- 0 610 007
- WO-A-94/01980

## Description

The present invention relates to an encoding and decoding system and in particular to a system which utilizes masking characteristics of channels for bit allocation.

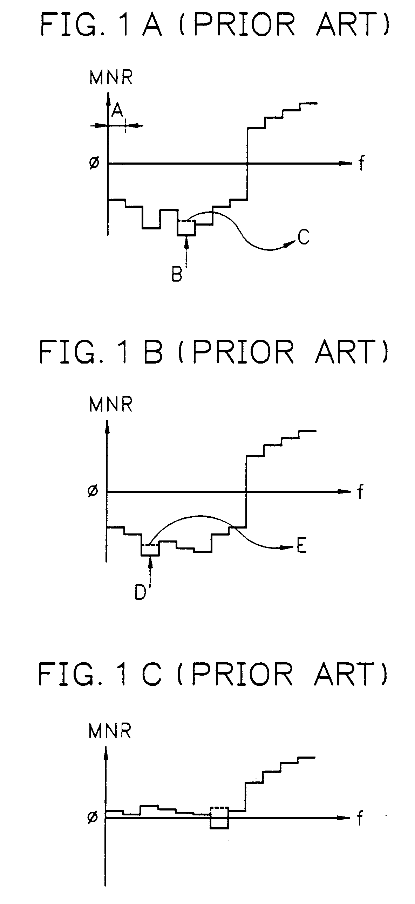

Generally, in digital audio products such digital video cassette recorders (VCR), high-definition televisions (HD-TV), digital compact cassettes (DCC), multimedia systems, and digital broadcasting systems (DBS), an analog audio signal is sampled and the sampled audio signal is converted into a digital audio signal so as to be recorded on a medium or to be transmitted. However, to record and reproduce or to transmit and receive the sampled digital audio signal, data rates of more than 700 Kbps for a channel are required. Accordingly, it has been difficult in applying conventional encoding technology to particular products because of the excessive amount of data required. To solve such a conventional difficulty, various encoding methods for compressing data more than four times while maintaining audio signal quality have been proposed. Among them, one is an encoding method using variable bit allocation. In the variable bit allocation method of the moving picture expert group (MPEG), the sampled audio signal band is divided into divided bands using a subband filter group, and a masking threshold value which is varied according to a specific weight of an audio quality and an audio source is calculated using a human auditory system, thereby adaptively allocating the number of bits to each divided band. Such a variable bit allocation method of the MPEG will be described below with reference to Figures 1A through 1C.

Figures 1A through 1C are graphical views for explaining a method for allocating bits to each divided band by a conventional variable bit allocation encoding method. Figures 1A through 1C schematically show thirty-two divided bands, in which a digital audio signal band is divided into thirty-two frequency divided bands each of which has a predetermined width A. Figure 1A shows a masking to noise ratio (MNR) with respect to each frequency divided band in an initial state prior to bit allocation. Figure 1B shows an MNR with respect to each divided band during bit allocation. Figure 1C shows an MNR with respect to each divided band after completion of bit allocation. Referring to Figures 1A through 1C, a conventional variable bit allocation method will be described below.

If calculation of initial values (illustrated as a solid line) of the MNR with respect to the divided bands has been completed, bit allocation for quantization starts from a divided band having the lowest value of the MNR. The divided band B of Figure 1A having the lowest MNR value among the 32 divided bands increases a value of the MNR through the bit allocation as depicted as a dotted line C. After completion of the bit allocation with respect to divided band B, a divided band having the lowest MNR value becomes a divided band D shown in Figure 1B. The divided band D increases the MNR value through the bit allocation as shown as a dotted line E. Such a process is repeated until the number of bits which are allocated to the divided bands does not become larger than that permissible for one form of an audio signal. The MNR values after completion of the bit allocation with respect to the entire frequency bands of the audio signal becomes values more than zero with respect to the most of the divided bands as shown in Figure 1C. When the MNR values all of the divided bands become more than zero, the human auditory system cannot recognize noise even though the noise is included in the audio signal. Thus, listeners cannot perceive the noise (the quantization noise) for the frame. However, the MNR value after completion of the bit allocation is generally varied according to a class of the audio signal and a specific weight of the audio quality. For instance, since a human voice or a piano sound does not include a significant high frequency component, the MNR values after completion of the bit allocation become more than zero with respect to all the divided bands. On the other hand, since a sound of a beat instrument includes a considerable high frequency component, the MNR values after completion of the bit allocation becomes less than zero with respect to some of divided bands. Therefore, the conventional variable bit allocation method of the MPEG has the consequence of degrading the audio quality due to the signal degeneration when reproducing an audio signal having many high frequency components, and users perceive the noise.

European Patent application EP-A-0559383 (AT&T) discloses a method and apparatus for coding audio signals based on a perceptual model in which stereophonic audio signals are coded by a perceptual filter-bank coder which exploits interchannel redundancies. Using perceptual principles, switching between a normal and a short window of input samples is said to improve output signal quality for certain input signals, particularly those having a rapid attack. Switching is accomplished between coding of left and right channels and so-called sum and difference channels in response to particular signal conditions.

Therefore, with a view to solving or reducing the above problems, it is an aim of preferred embodiments of the present invention to provide an encoding method which utilizes masking characteristics of channels for bit allocation so as to improve sound quality when reproducing an audio signal, in which when audio signals equal to or more than two channels are encoded, the number of bits required are reduced for a channel where an MNR value of each divided band is more than a predetermined value and the residue bits corresponding to the number of remaining bits are additionally allocated to each divided band of another channel having an MNR value less than the predetermined value.

It is another aim of preferred embodiments of the present invention to provide an apparatus embodying the above encoding method.

It is still another aim of preferred embodiments of the present invention to provide an apparatus for decoding an audio signal encoded by such an encoding apparatus.

According to a first aspect of the present invention, there is provided an encoding apparatus which utilizes masking characteristics of channels for bit allocation in order to encode digitally sampled audio frame signals of at least two channels, said encoding apparatus comprising first and second filter groups, first and second threshold calculation means, bit allocation means and first and second quantization means, the apparatus being characterised by the following features:
the first filter group comprises a first divided band filter group for receiving an input first channel audio signal, dividing the input first channel audio signal into predetermined frequency divided bands and outputting a first channel frequency divided signal;
the first threshold calculation means comprises a first threshold value calculation means for receiving both the input first channel audio signal and the first channel frequency divided signal of said first divided band filter group, and calculating a first masking threshold value;
the second filter group comprises a second divided band filter group for receiving an input second channel audio signal, dividing the input second channel audio signal into predetermined frequency divided bands and outputting a second channel frequency divided signal;
the second threshold calculation means comprises a second threshold value calculation means for receiving both the input second channel audio signal and the second channel frequency divided signal of said second divided band filter group, and calculating a second masking threshold value;
the bit allocation means is arranged for: (i) performing bit allocation for the respective first and second channel frequency divided signals; (ii) receiving the respective first and second masking threshold values; (iii) detecting a masking to noise ratio of the respective first and second channels so as to monitor sub-bands of the first and second frequency divided signals; (iv) performing bit allocation to respective sub-bands of the first and second frequency divided signals, until the masking to noise ratio of all sub-bands of one of said respective first and second frequency divided signals exceeds its respective first or second masking threshold value; (v) using remaining bits which have not been used in exceeding the masking threshold value of the said one of said first or second frequency divided signals for bit allocation to the other of said first or second frequency divided signals; and (vi) producing bit allocation information corresponding to each channel and bit ratio information between the channels;
the first quantization means is arranged for receiving the first channel frequency divided signal output from said first divided band filter group and for quantizing the received first channel frequency divided signal in response to the bit allocation information of said bit allocation means to output a quantized first channel signal;
the second quantization means is arranged for receiving the second channel frequency divided signal output from said second divided band filter group and quantizing the received second channel frequency divided signal in response to the bit allocation information of said bit allocation means to output a quantized second channel signal; and
multiplexing means are provided for multiplexing the signals output from said first and second quantization means, and the bit allocation information and the bit ratio information from said bit allocation means, and outputting the resulting multiplexed signal.

Preferably, said bit allocation means allocates bits to the respective divided bands of the first and second channels by using a predetermined total combined number of bits for the first and second channel frequency divided signals of an audio frame.

Preferably, said bit allocation means comprises: a first bit allocator which allocates bits in a prioritised manner so as to first allocate bits to those particular divided frequency bands having the lowest masking to noise ratio among the divided frequency bands of the first channel, calculates revised masking to noise ratios with respect to the bit allocated divided frequency bands and compares the calculated revised masking to noise ratios with the first masking threshold value; and a second bit allocator which allocates bits in a prioritised manner so as to first allocate bits to those particular divided frequency bands having the lowest masking to noise ratio among the divided frequency bands of the second channel, calculates revised masking to noise ratios with respect to the bit-allocated divided band and compares the calculated masking to noise ratio with the second masking threshold value, wherein when said first bit allocator allocates bits with respect to all the divided frequency bands of the first channel so as to attain masking to noise ratios for each divided frequency band which exceed the first masking threshold value earlier than said second bit allocator, said first bit allocator thereafter outputs bit allocation completion information to said second bit allocator, and said second bit allocator generates bit ratio information based on the bit allocation completion information.

Preferably, when said second bit allocator allocates bits with respect to all the divided frequency bands of the second channel so as to attain masking to noise ratios which exceed the second masking threshold value earlier than said first bit allocator, said second bit allocator thereafter outputs bit allocation completion information to said first bit allocator, and said first bit allocator generates bit ratio information based on the bit allocation completion information.

Preferably, said bit ratio information is determined based on the number of bits which are used for bit allocation by the particular channel where the bit allocation has been accomplished earliest.

According to a second aspect of the invention, there is provided a decoding apparatus using masking characteristics of channels for bit allocation in order to distribute an encoded and multiplexed input audio bit stream of two channels into their respective channels and to decode the resultant distributed audio bit stream, said decoding apparatus being characterised by: a first-in first-out memory for storing a bit stream in which externally supplied two-channel audio data is combined and stored data is output, according to a write enable signal and a read enable signal; a first digital signal processor for generating a control signal for controlling a read operation by detecting an interrupt signal supplied from said first-in first-out memory, and receiving the two-channel audio bit stream read from said first-in first-out memory to decode only audio data of a first channel; control logic means for supplying the read enable signal to said first-in first-out memory according to the control signal supplied from said first digital signal processor; and a second digital signal processor for receiving second channel audio data which has been separated from the first channel audio data by said first digital signal processor and for decoding the received second channel audio data.

Preferably, said first-in first-out memory outputs said interrupt signal as soon as the input audio data is fully recorded therein.

Preferably, said first digital signal processor detects the bit ratio information between the channels from the audio bit stream from said first-in first-out memory and separates the respective channel audio data therefrom based on the detected bit ratio information.

According to a third aspect of the invention, there is provided an encoding method which utilizes masking characteristics of channels for bit allocation in order to encode digitally sampled audio frame signals of at least two channels, said encoding method including the general steps of band filtering the two channel signals, allocating bits, and quantizing based on the allocated number bits and, in more detail, the method being characterised by the following specific steps of: receiving an input first channel audio signal, dividing the input first channel audio signal into predetermined frequency divided bands to output a first channel frequency divided signal, and calculating a first masking threshold value; receiving an input second channel audio signal, dividing the input second channel audio signal into predetermined frequency divided bands to output a second channel frequency divided signal, and calculating a second masking threshold value; calculating masking to noise ratios and recalculating revised masking to noise ratios resulting from progressive bit allocation for each of the first channel frequency divided bands and each of the second channel frequency divided bands, and comparing the calculated masking to noise ratios with the first masking threshold value and the second masking threshold value for each frequency divided band of the respective first and second channel; detecting when each frequency divided band of a given channel has achieved a condition in which the masking to noise ratio in which each bit allocated frequency divided band exceeds a masking threshold value based on the result of the above comparing step; for the channel in which it has been detected earliest that the above mentioned condition has been achieved, allocating those remaining bits which have not already been allocated to the other channel in which said above mentioned condition has not yet been achieved, and producing bit allocation information corresponding to each channel and bit ratio information between the channels; receiving the bit allocation information corresponding to each channel and quantizing the frequency divided signals of each channel to output quantized channel signals; and multiplexing: (i) the bit ratio information; (ii) bit allocation completion information from the channel which has achieved the abovementioned condition earliest; and (iii) the quantized channel signals.

Preferably, said calculation and comparison step comprises repeatedly performing the steps of: performing bit allocation with respect to the particular frequency divided band having the lowest masking to noise ratio; and comparing the masking to noise ratio corresponding to the frequency divided band for which bit allocation has been accomplished with the masking threshold value of the corresponding channel.

Preferably, said information producing step produces said bit allocation information at the time at which bit allocation has been accomplished for the two channels.

Preferably, said bit ratio information represents a ratio between the number of allocated bits of the first channel and the number of allocated bits of the second channel at the time at which the bit allocation has been accomplished with respect to the two channels of the audio frame.

For a better understanding of the invention, and to show how embodiments of the same may be carried into effect, reference will now be made, by way of example, to the accompanying diagrammatic drawings, in which:
Figures 1A and 1C are graphical views for explaining a method for allocating bits to each divided band through the conventional variable bit allocation encoding method;
Figure 2 is a block diagram of an encoding apparatus using masking characteristics for bit allocation according to one preferred embodiment of the present invention;
Figures 3A through 3D are graphical views for explaining an improved bit allocation method in the Figure 2 apparatus;
Figure 4 shows a structure of a bit stream forming one audio frame according to one embodiment of the present invention; and
Figure 5 is a block diagram of an apparatus for decoding an audio signal generated by the Figure 2 apparatus.

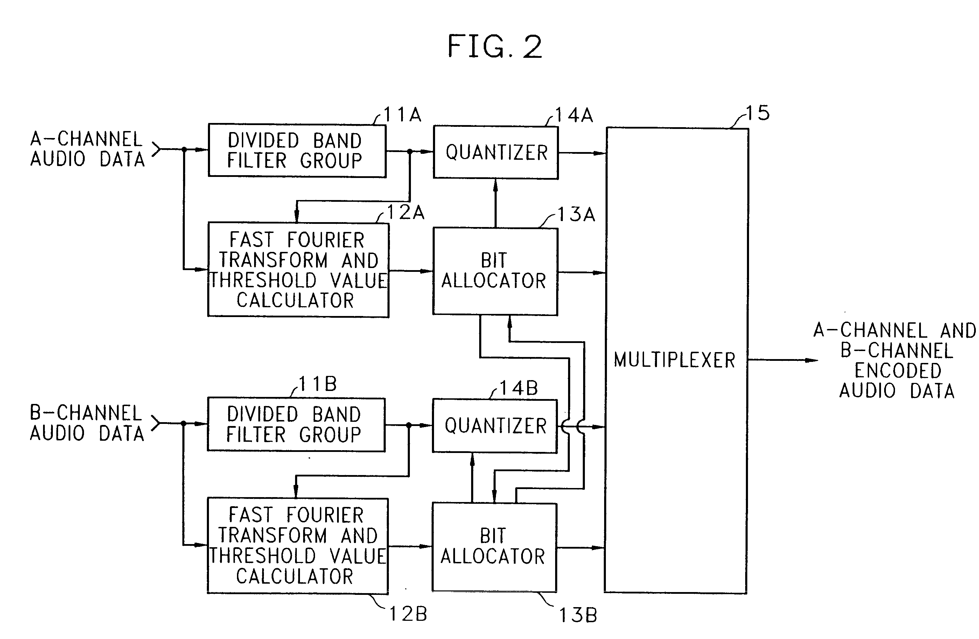

A preferred embodiment of the present invention will be described below in more detail with reference to the accompanying Figures 2 through 5.

Figure 2 is a block diagram of an encoding apparatus using masking characteristics for bit allocation according to one preferred embodiment of the present invention. In Figure 2, divided band filter group 11A divides a digitally sampled A-channel audio signal into N divided-band signals. The output of divided band filter group 11A divides a digitally sampled A-channel audio signal into N divided-band signals. The output of divided band filter group 11A is connected to a fast Fourier transform and threshold value calculator 12A and a quantizer 14A. Fast Fourier transform and threshold value calculator 12A receives an audio signal input to divided band filter group 11A and the divided-band signals output from divided band filter group 11A and calculates a first masking threshold value in which noise cannot be detected in view of a characteristic of a human auditory system. A bit allocator 13A receives the first masking threshold value from fast Fourier transform and threshold value calculator 12A and generates bit allocation completion information with respect to all the A-channel divided bands. The bit allocation completion information is supplied to quantizer 14A. Quantizer 14A quantizes the output signal of divided band filter group 11A according to the bit allocation completion information supplied from bit allocator 13A, and outputs the quantized signal for multiplexer 15.

Bit allocator 13A is connected to a second bit allocator 13B for generating bit allocation completion information with respect to all the B-channel divided bands. The digitally sampled B-channel audio signal is supplied to a second divided band filter group 11B and a second fast Fourier transform and threshold value calculator 12B. Fast Fourier transform and threshold value calculator 12B generates a second masking threshold value and outputs the second masking threshold value to second bit allocator 13B. A second quantizer 14B quantizes the output signal of divided band filter group 11B according to the bit allocation completion information supplied from bit allocator 13B, and outputs the quantized signal for multiplexer 15.

Bit allocators 13A and 13B are connected to each other so as to give and take the information to and from each other. Bit allocator 13A or 13B generates bit allocation completion information corresponding to each channel or bit ratio information between channels. For example, if the B-channel bit allocator 13B generates the bit allocation completion information, A-channel bit allocator 13A which receives the bit allocation completion information generates the bit ratio information between the channels. Multiplexer 15 multiplexes the signals supplied from quantizers 14A and 14B and bit allocators 13A and 13B and outputs the result.

The operation of the Figure 2 apparatus having the above construction will be described below.

The digitally sampled A-channel audio signal is applied to divided band filter group 11A and fast Fourier transform and threshold value calculator 12A, and the digitally sampled B-channel audio signal is applied to divided band filter group 11B and fast Fourier transform and threshold value calculator 12B. The blocks 11A, 12A, 13A and 14A for processing the A-channel audio signal and the blocks 11B, 12B, 13B and 14B for processing the B-channel audio signal perform the same operation until the bit allocation with respect to one channel completes.

Such bit allocation will be described with respect to only the A-channel. Divided band filter group 11A divides the applied digitally sampled audio signal into a predetermined number of divided bands (thirty-two in case of the MPEG). Fast Fourier transform and threshold value calculator 12A receives an audio signal applied to divided band filter group 11A and an audio signal output from divided band filter group 11A, Fourier-transforms the received audio signals, analyzes the spectrum of the audio signals and calculates a first masking threshold value in which noise cannot be detected in view of a characteristic of a human auditory system. The calculated first masking threshold value is applied to bit allocator 13A. Bit allocator 13A performs bit allocation with respect to each divided band using a predetermined number of bits for an audio frame. Here, the bit allocation is performed with respect to the band having the lowest MNR until each divided band has an MNR which exceeds the first masking threshold value. In this manner, during the bit allocation with respect to the A-channel and B-channel divided bands, bit allocator 13A or 13B of the channel of which the bit allocation is accomplished generates bit allocation completion information and supplies the same to bit allocator 13B or 13A of which the bit allocation is being performed. Here, the channel of which the bit allocation is accomplished represents a channel having an MNR in which each divided band for one audio frame exceeds a masking threshold value. For example, when the A-channel bit allocator 13A completes earlier than the B-channel bit allocator 13B, bit allocator 13A generates bit allocation completion information and outputs the same to bit allocator 13B. The bit allocation completion information includes the number of the allocated bits with respect to the A-channel divided bands. If the bit allocation completion information is applied to bit allocator 13B, the number of the bits used for the bit allocation of the A-channel is subtracted from the predetermined number of the bits with respect to one audio frame. The number of the difference bits between the number of the bits obtained by the subtraction and the number of the allocated bits of the B-channel at the time of the completion of the bit allocation with respect to the A-channel, is used for bit allocation of the B-channel. For example, when one hundred and sixty bits are given to one audio frame, A-channel bit allocator 13A uses seventy bits and completes the bit allocation with respect to all the divided bands of the A-channel. Then, bit allocator 13B can use remaining ninety bits for bit allocation of the B-channel. Bit allocator 13B additionally uses the number of the remaining bits after the completion of the bit allocation of the A-channel and continuously performs bit allocation with respect to the divided bands of the B-channel. Bit allocator 13B generates bit ratio information which represents a ratio of the number of the bits which are used for the bit allocation of the A-channel to the number of the bits which are used for the bit allocation of the B-channel. The bit ratio information represents a ratio of the number of the bits which are used for the bit allocation of the A-channel to the number of the bits which are used for the bit allocation of the B-channel, that is, M:N (M and N are integers). Here, M is the A-channel bit allocation and N is the B-channel bit allocation. Such bit ratio information is used for easily decoding the audio bit stream multiplexed with even video data. If the bit allocation is accomplished with respect to the two channels, bit allocator 13A outputs the bit allocation information to quantizer 14A and multiplexer 15, and bit allocator 13B generates the bit ratio information and the bit allocation information and outputs the bit ratio information and the bit allocation information to multiplexer 15 and outputs the bit ratio information to quantizer 14B. Quantizer 14A quantizes the divided band signals input from divided band filter group 11A according to the applied bit allocation information, so as to output the result. Likewise, quantizer 14B quantizes the divided band signals input from divided band filter group 11B according to the applied bit allocation information, so as to output the result. As described above, a case where the A-channel bit allocation is earlier accomplished has been described. However, when the B-channel bit allocation is earlier accomplished, the Figure 2 apparatus operates so that bit allocator 13B generates the bit allocation completion information and bit allocator 13A generates the bit ratio information.

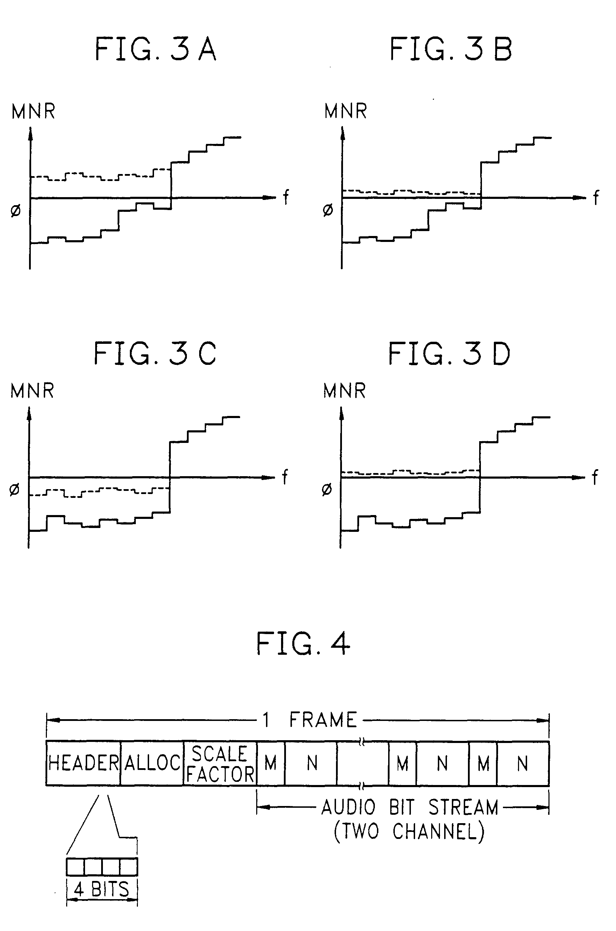

Figures 3A through 3D are graphical views for explaining an improved bit allocation method in the Figure 2 apparatus. In Figures 3A and 3B, solid lines represent values of the MNR of the respective divided bands or the frequency bands at the initial states prior to the bit allocation, and illustrate the respective MNR values of the divided bands with respect to the sampled audio signals of one channel where high frequency components do not exist as in a human voice or a piano sound. In Figures 3C and 3D, solid lines represent the respective MNR values of the divided bands at the initial states prior to the bit allocation, and show the respective MNR values of the divided bands with respect to the sampled audio signals of the other channel where high frequency components exist as in a sound of a beat instrument. When comparing the initial MNR values of the two channels to each other, the MNR value of the beat instrument such as a drum in case of the MNR value of the high frequency domain has a lower value than the MNR value of the human voice or the piano sound. This is due to a fact that the sound of the beat instrument generally has a larger high frequency component than that of the human voice, and the sound of the beat instrument has a relatively wide amplitude from a low frequency to a high frequency on a spectrum.

If bit allocation were performed by the conventional method, the MNR values represented as the solid lines as shown in Figures 3A and 3C are changed into the MNR values represented as the dotted lines. However, in this case, the final MNR values with respect to the human voice have much larger values than zero being a masking threshold value over the entire divided bands as shown in Figure 3A, while the final MNR values with respect to the sound of the beat instrument have values equal to or less than zero being the masking threshold value with respect to a plurality of the divided bands as shown in Figure 3C.

On the contrary, if the bit allocation with respect to the two channels using the bit allocation method according to embodiments of the present invention is accomplished, the final MNR values have the MNR values represented as the dotted lines in Figures 3B and 3D. That is, after the bit allocation with respect to the two channels is accomplished, the MNR values (Figure 3B) with respect to the human voice and the MNR values (Figure 3D) with respect to the sound of the beat instrument exceed zero being the masking threshold value. Therefore, the user cannot perceive noise from the reproduced sound, thereby improving sound quality.

Returning to Figure 2 again, multiplexer 15 multiplexes the signals quantized by quantizers 14A and 14B, the bit allocation information and/or the bit ratio information output from bit allocators 13A and 13B, and outputs the multiplexed result. The bit stream output from multiplexer 15 will be described below with reference to Figure 4.

Figure 4 shows a structure of a bit stream forming one audio frame. The audio frame produced by multiplexer 15 is composed of 36-bit header data, bit allocation information, a scale factor and audio data, in sequence. The header data includes four-bit ratio information which represents a bit ratio of one channel with respect to the predetermined number of the bits in one audio frame in addition to thirty-two bits recommended by the MPEG. The bit allocation information is information for allocating the bits to each divided band. Then, the scale factor is a parameter which is used for quantization as is well known. The audio data following the scale factor is composed of the A-channel audio data and the B-channel audio data both of which are alternated. When the bit ratio information is composed of four bits, the bit ratio information which is actually produced by multiplexer 15 has a value of M-1. Thus, the bit ratio with respect to the B-channel becomes 16-(M-1). For example, if the bit ratio information which is produced by multiplexer 15 is five, M becomes six and N becomes ten. Thus, the audio data forming the bit stream has a format in which six bits of the A-channel and ten bits of the B-channel are alternated.

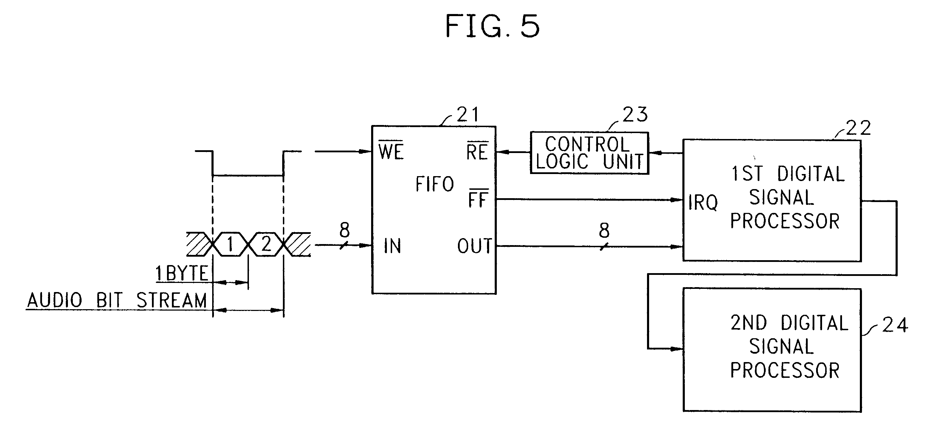

Figure 5 is a block diagram of an apparatus for decoding an audio signal generated by the Figure 2 apparatus. In Figure 5, FIFO memory 21 stores an audio bit stream which is applied thereto according to a write enable signal of a controller (not shown) and outputs the stored data according to read enable signal of control logic unit 23. A first digital signal processor 22 outputs a signal for controlling a read operation to control logic unit 23 in response to an interrupt signal IRQ applied from FIFO memory 21. First digital signal processor 22 also receives the audio bit stream read from FIFO memory 21 and decodes only the A-channel audio signal, while the B-channel audio signal is supplied to a second digital signal processor 24. Control logic unit 23 outputs read enable signal to FIFO memory 21 according to a control signal applied from first digital signal processor 22. Second digital signal processor 24 receives the B-channel audio signal and decodes the received audio signal.

The operation of the Figure 5 apparatus as constructed above will be described below.

A bit stream having a video signal and multiplexed audio signal is input to an input end IN of FIFO memory 21. A controller (not shown) generates a write enable signal for separating an audio signal from the bit stream. FIFO memory 21 stores the applied bit stream by one byte when write enable signal having a sequential two one-byte interval is a low level state. FIFO memory 21 outputs interrupt signal IRQ to first digital signal processor 22 through full flag end FF as soon as a state of storing the data therein becomes full. First digital signal processor 22 outputs a control signal to control logic unit 23 as soon as the interrupt signal is applied thereto. Control logic unit 23 outputs read enable signal to FIFO memory 21 in response to the control signal. FIFO memory 21 outputs the bit stream having the A-channel audio data mixed with the B-channel audio data to first digital signal processor 22 in response to a low level state of read enable signal. First digital signal processor 22 separates the input audio bit stream into the A-channel audio data and the B-channel audio data using the bit ratio information which is inserted in a header portion, and decodes the only A-channel audio data. The B-channel audio data output from first digital signal processor 22 is applied to second digital signal processor 24 which decodes the input B-channel audio data.

As described above, when the audio data of at least two channels is encoded, the number of the bits are saved at the channel of which the respective MNR values of the divided bands are all equal to or more than a predetermined value, and then the residue bits corresponding to the number of the remaining bits are additionally allocated to the other channel of which the respective MNR values are equal to or less than the predetermined value. Accordingly, the present invention has an effect of improving a quality of the sound so that the user cannot feel noise when an audio signal including many high frequency components is reproduced.

## Claims

1. An encoding apparatus which utilizes masking characteristics of channels for bit allocation in order to encode digitally sampled audio frame signals of at least two channels, said encoding apparatus comprising first and second filter groups, first and second threshold calculation means, bit allocation means and first and second quantization means, the apparatus being **characterised by** the following features:
the first filter group comprises a first divided band filter group (11A) for receiving an input first channel audio signal, dividing the input first channel audio signal into predetermined frequency divided bands and outputting a first channel frequency divided signal;
the first threshold calculation means comprises a first threshold value calculation means (12A) for receiving both the input first channel audio signal and the first channel frequency divided signal of said first divided band filter group (11A), and calculating a first masking threshold value;
the second filter group comprises a second divided band filter group (11B) for receiving an input second channel audio signal, dividing the input second channel audio signal into predetermined frequency divided bands and outputting a second channel frequency divided signal;
the second threshold calculation means comprises a second threshold value calculation means (12B) for receiving both the input second channel audio signal and the second channel frequency divided signal of said second divided band filter group (11B), and calculating a second masking threshold value;
the bit allocation means (13A, 13B) is arranged for:
(i) performing bit allocation for the respective first and second channel frequency divided signals;
(ii) receiving the respective first and second masking threshold values;
(iii) detecting a masking to noise ratio of the respective first and second channels so as to monitor sub-bands of the first and second frequency divided signals;
(iv) performing bit allocation to respective sub-bands of the first and second frequency divided signals, until the masking to noise ratio of all sub-bands of one of said respective first and second frequency divided signals exceeds its respective first or second masking threshold value;
(v) using remaining bits which have not been used in exceeding the masking threshold value of the said one of said first or second frequency divided signals for bit allocation to the other of said first or second frequency divided signals; and
(vi) producing bit allocation information corresponding to each channel and bit ratio information between the channels;
the first quantization means (14A) is arranged for receiving the first channel frequency divided signal output from said first divided band filter group (11A) and for quantizing the received first channel frequency divided signal in response to the bit allocation information of said bit allocation means (13A, 13B) to output a quantized first channel signal;
the second quantization means (14B) is arranged for receiving the second channel frequency divided signal output from said second divided band filter group (11B) and quantizing the received second channel frequency divided signal in response to the bit allocation information of said bit allocation means (13A, 13B) to output a quantized second channel signal; and
multiplexing means (15) are provided for multiplexing the signals output from said first and second quantization means (14A, 14B), and the bit allocation information and the bit ratio information from said bit allocation means (13A, 13B), and outputting the resulting multiplexed signal.

2. An encoding apparatus using masking characteristics of channels for bit allocation according to claim 1, wherein said bit allocation means (13A, 13B) allocates bits to the respective divided bands of the first and second channels by using a predetermined total combined number of bits for the first and second channel frequency divided signals of an audio frame.

3. An encoding apparatus using masking characteristics of channels for bit allocation according to claim 1 of 2, wherein said bit allocation means (13A, 13B) comprises:
a first bit allocator (13A) which allocates bits in a prioritised manner so as to first allocate bits to those particular divided frequency bands having the lowest masking to noise ratio among the divided frequency bands of the first channel, calculates revised masking to noise ratios with respect to the bit allocated divided frequency bands and compares the calculated revised masking to noise ratios with the first masking threshold value; and
a second bit allocator (13B) which allocates bits in a prioritised manner so as to first allocate bits to those particular divided frequency bands having the lowest masking to noise ratio among the divided frequency bands of the second channel, calculates revised masking to noise ratios with respect to the bit-allocated divided band and compares the calculated masking to noise ratio with the second masking threshold value,
wherein when said first bit allocator (13A) allocates bits with respect to all the divided frequency bands of the first channel so as to attain masking to noise ratios for each divided frequency band which exceed the first masking threshold value earlier than said second bit allocator (13B), said first bit allocator (13A) thereafter outputs bit allocation completion information to said second bit allocator (13B), and said second bit allocator (13B) generates bit ratio information based on the bit allocation completion information.

4. An encoding apparatus using masking characteristics of channels for bit allocation according to claim 3, wherein when said second bit allocator (13B) allocates bits with respect to all the divided frequency bands of the second channel so as to attain masking to noise ratios which exceed the second masking threshold value earlier than said first bit allocator (13A), said second bit allocator (13B) thereafter outputs bit allocation completion information to said first bit allocator (13A), and said first bit allocator (13B) generates bit ratio information based on the bit allocation completion information.

5. An encoding apparatus using masking characteristics of channels for bit allocation according to any of the preceding claims, wherein said bit ratio information is determined based on the number of bits which are used for bit allocation by the particular channel where the bit allocation has been accomplished earliest.

6. A decoding apparatus using masking characteristics of channels for bit allocation in order to distribute an encoded and multiplexed input audio bit stream of two channels into their respective channels and to decode the resultant distributed audio bit stream, said decoding apparatus being **characterised by**:
a first-in first-out memory (21) for storing a bit stream in which externally supplied two-channel audio data is combined and stored data is output, according to a write enable signal and a read enable signal;
a first digital signal processor (22) for generating a control signal for controlling a read operation by detecting an interrupt signal supplied from said first-in first-out memory (21), and receiving the two-channel audio bit stream read from said first-in first-out memory (21) to decode only audio data of a first channel;
control logic means (23) for supplying the read enable signal to said first-in first-out memory (21) according to the control signal supplied from said first digital signal processor (22); and
a second digital signal processor (24) for receiving second channel audio data which has been separated from the first channel audio data by said first digital signal processor (22) and for decoding the received second channel audio data.

7. A decoding apparatus using masking characteristics of channels for bit allocation according to claim 6, wherein said first-in first-out memory (21) outputs said interrupt signal as soon as the input audio data is fully recorded therein.

8. A decoding apparatus using masking characteristics of channels for bit allocation according to claim 6 or 7, wherein said first digital signal processor (22) detects bit ratio information between the channels from the audio bit stream from said first-in first-out memory (21) and separates the respective channel audio data therefrom based on the detected bit ratio information.

9. An encoding method which utilizes masking characteristics of channels for bit allocation in order to encode digitally sampled audio frame signals of at least two channels, said encoding method including the general steps of band filtering the two channel signals, allocating bits, and quantizing based on the allocated number bits and, in more detail, the method being **characterised by** the following specific steps of:
receiving an input first channel audio signal, dividing the input first channel audio signal into predetermined frequency divided bands to output a first channel frequency divided signal, and calculating a first masking threshold value;
receiving an input second channel audio signal, dividing the input second channel audio signal into predetermined frequency divided bands to output a second channel frequency divided signal, and calculating a second masking threshold value;
calculating masking to noise ratios and recalculating revised masking to noise ratios resulting from progressive bit allocation for each of the first channel frequency divided bands and each of the second channel frequency divided bands, and comparing the calculated masking to noise ratios with the first masking threshold value and the second masking threshold value for each frequency divided band of the respective first and second channel;
detecting when each frequency divided band of a given channel has achieved a condition in which the masking to noise ratio in which each bit allocated frequency divided band exceeds a masking threshold value based on the result of the above comparing step;
for the channel in which it has been detected earliest that the above mentioned condition has been achieved, allocating those remaining bits which have not already been allocated to the other channel in which said above mentioned condition has not yet been achieved, and producing bit allocation information corresponding to each channel and bit ratio information between the channels;
receiving the bit allocation information corresponding to each channel and quantizing the frequency divided signals of each channel to output quantized channel signals; and
multiplexing: (i) the bit ratio information; (ii) bit allocation completion information from the channel which has achieved the abovementioned condition earliest; and (iii) the quantized channel signals.

10. An encoding method using masking characteristics of channels for bit allocation according to claim 9, wherein said calculation and comparison step comprises repeatedly performing the steps of:
performing bit allocation with respect to the particular frequency divided band having the lowest masking to noise ratio; and
comparing the masking to noise ratio corresponding to the frequency divided band for which bit allocation has been accomplished with the masking threshold value of the corresponding channel.

11. An encoding method using masking characteristics of channels for bit allocation according to claim 9 or 10, wherein said information producing step produces said bit allocation information at the time at which bit allocation has been accomplished for the two channels.

12. An encoding method using masking characteristics of channels for bit allocation according to claim 9, wherein said bit ratio information represents a ratio between the number of allocated bits of the first channel and the number of allocated bits of the second channel at the time at which the bit allocation has been accomplished with respect to the two channels of the audio frame.

## Patentansprüche

1. Vorrichtung zum Codieren, die Maskierungs-Charakteristika von Kanälen für eine Bit-Zuordnung verwendet, um digital abgetastete Audio-Rahmen-Signale von mindestens zwei Kanälen zu codieren, wobei die Vorrichtung zum Codieren eine erste und eine zweite Filter-Gruppe, eine erste und eine zweite Schwellwert-Berechnungseinrichtung, eine Bit-Zuordnungseinrichtung und eine erste und eine zweite Quantisierungseinrichtung aufweist, wobei die Vorrichtung durch die folgenden Merkmale **gekennzeichnet ist**:
die erste Filter-Gruppe weist eine erste Teilungs-Band-Filter-Gruppe (11A) zum Aufnehmen eines Eingabe-Audio-Signals eines ersten Kanals auf, wobei das Eingabe-Audio-Signal des ersten Kanals in in mit vorbestimmter Frequenz unterteilte Bänder unterteilt wird und ein Frequenz-Teilungs-Signal für den ersten Kanal ausgegeben wird;
die erste Schwellwert-Berechnungseinrichtung weist eine erste Schwellwert-Berechnungseinrichtung (12A) zum Aufnehmen sowohl des Eingabe-Audio-Signals des ersten Kanals als auch des Frequenz-Teilungs-Signals des ersten Kanals der ersten, unterteilten Teilungs-Band-Filter-Gruppe (11A), und zum Berechnen eines ersten Maskierungs-Schwellwerts auf;
die zweite Filter-Gruppe weist eine zweite Teilungs-Band-Filter-Gruppe (11B) zum Aufnehmen eines Eingabe-Audio-Signals des zweiten Kanals auf, wobei das Eingabe-Audio-Signal des zweiten Kanals in in mit vorbestimmter Frequenz unterteilte Bänder unterteilt wird und ein Frequenz-Teilungs-Signal für den zweiten Kanal ausgegeben wird;
die zweite Schwellwert-Berechnungseinrichtung weist eine zweite Schwellwert-Berechnungseinrichtung (12B) zum Aufnehmen sowohl des Eingabe-Audio-Signals des zweiten Kanals als auch des Frequenz-Teilungs-Signals des zweiten Kanals der zweiten Teilungs-Band-Filter-Gruppe (11 B), und zum Berechnen eines zweiten Maskierungs-Schwellwerts auf;
wobei die Bit-Zuordnungseinrichtung (13A, 13B) angeordnet ist für:
(i) Durchführen einer Bit-Zuordnung für die in der Frequenz unterteilten Signale des ersten und des zweiten Kanals;
(ii) Aufnehmen der jeweiligen ersten und zweiten Maskierungs-Schwellwerte;
(iii) Erfassen eines Maskierungs-Rausch-Verhältnisses des jeweiligen ersten und des zweiten Kanals so, um Unterbänder der unterteilten Signale der ersten und der zweiten Frequenz zu überwachen;
(iv) Durchführen einer Bit-Zuordnung zu jeweiligen Unterbändern der unterteilten Signale der ersten und der zweiten Frequenz, bis das Maskierungs-Rausch-Verhältnis aller Unterbänder eines der jeweiligen ersten und zweiten Frequenz-Teilungs-Signale deren jeweiligen ersten oder zweiten Maskierungs-Schwellwert übersteigt;
(v) Verwenden von verbleibenden Bits, die nicht beim Überschreiten des Maskierungs-Schwellwerts des einen des ersten oder des zweiten Frequenz-Teilungs-Signals für eine Bit-Zuordnung zu dem anderen des ersten oder zweiten in der Frequenz unterteilten Signals verwendet worden sind; und
(vi) Erzeugen von Bit-Zuordnungs-Informationen entsprechend zu jedem Kanal und von Bit-Verhältnis-Informationen zwischen den Kanälen;
die erste Quantisierungseinrichtung (14A) ist zum Aufnehmen des Frequenz-Teilungs-Signals des ersten Kanals, ausgegeben von der ersten Teilungs-Band-Filter-Gruppe (11A), und zum Quantisieren des aufgenommenen Frequenz-Teilungs-Signals des ersten Kanals in Abhängigkeit der Bit-Zuordnungs-Informationen der Bit-Zuordnungseinrichtungen (13A, 13B), um ein quantisiertes erstes Kanal-Signal auszugeben, angeordnet;
die zweite Quantisierungseinrichtung (14B) ist zum Aufnehmen des Frequenz-Teilungs-Signals des zweiten Kanals, ausgegeben von der zweiten Teilungs-Band-Filter-Gruppe (11 B), und zum Quantisieren des aufgenommenen Frequenz-Teilungs-Signals des zweiten Kanals in Abhängigkeit der Bit-Zuordnungs-Informationen der Bit-Zuordnungseinrichtungen (13A, 13B), um ein quantisiertes zweites Kanalsignal auszugeben, angeordnet; und Multiplexiereinrichtungen (15) sind zum Multiplexieren der Signale, ausgegeben von der ersten und der zweiten Quantisierungseinrichtung (14A, 14B), und der Bit-Zuordnungs-Informationen und der Bit-Verhältnis-Informationen von der Bit-Zuordnungseinrichtung (13A, 13B), und zum Ausgeben des sich ergebenden, multiplexierten Signals vorgesehen.

2. Vorrichtung zum Codieren, die Maskierungs-Charakteristika von Kanälen für eine Bit-Zuordnung verwendet, nach Anspruch 1, wobei die Bit-Zuordnungseinrichtung (13A, 13B) Bits zu den jeweiligen unterteilten Bändern des ersten und des zweiten Kanals unter Verwendung einer vorbestimmten, totalen, kombinierten Zahl von Bits für die Frequenz-Teilungs-Signale des ersten und des zweiten Kanals eines Audio-Rahmens zuordnet.

3. Vorrichtung zum Codieren, die Maskierungs-Charakteristika von Kanälen für eine Bit-Zuordnung verwendet, nach Anspruch 1 oder 2, wobei die Bit-Zuordnungseinrichtung (13A, 13B) aufweist:
einen ersten Bit-Zuordner (13A), der Bits in einer prioritätsmäßigen Art und Weise so zuordnet, um erste Zuordnungs-Bits zu solchen bestimmten Teilungs-Frequenz-Bändern zuzuordnen, die das niedrigste Maskierungs-Rausch-Verhältnis unter den Teilungs-Frequenz-Bändern des ersten Kanals besitzen, und überprüfte Maskierungs-Rausch-Verhältnisse in Bezug auf bit-mäßig zugeordnete Teilungs-Frequenz-Bänder berechnet und die berechneten, überprüften Maskierungs-Rausch-Verhältnisse mit dem ersten Maskierungs-Schwellwert vergleicht; und
einen zweiten Bit-Zuordner (13B), der Bits in einer prioritätsmäßigen Art und Weise so zuordnet, um erste Zuordnungs-Bits zu solchen bestimmten Teilungs-Frequenz-Bändern zuzuordnen, die das niedrigste Maskierungs-Rausch-Verhältnis unter den Teilungs-Frequenz-Bändern des zweiten Kanals besitzen, überprüfte Maskierungs-Rausch-Verhältnisse in Bezug auf das bit-mäßig zugeordnete Frequenz-Band berechnet und das berechnete Maskierungs-Rausch-Verhältnis mit dem zweiten Maskierungs-Schwellwert vergleicht,
wobei dann, wenn der erste Bit-Zuordner (13A) Bits in Bezug auf alle Teilungs-Frequenz-Bänder des ersten Kanals so zuordnet, um ein Maskierungs-Rausch-Verhältnis für jedes Teilungs-Frequenz-Band zu erhalten, das den ersten Maskierungs-Schwellwert früher als denjenigen des zweiten Bit-Zuordners (13B) übersteigt, der erste Bit-Zuordner (13A) danach Bit-Zuordnungs-Abschluß-Informationen zu dem zweiten Bit-Zuordner (13B) ausgibt und der zweite Bit-Zuordner (13B) Bit-Verhältnis-Informationen basierend auf den Bit-Zuordnungs-Abschluß-Informationen erzeugt.

4. Vorrichtung zum Codieren, die Maskierungs-Charakteristika von Kanälen für eine Bit-Zuordnung verwendet, nach Anspruch 3, wobei dann, wenn der zweite Bit-Zuordner (13B) Bits in Bezug auf alle Teilungs-Frequenz-Bänder des zweiten Kanals zuordnet, um so Maskierungs-Rausch-Verhältnisse zu erhalten, die den zweiten Maskierungs-Schwellwert früher als denjenigen des ersten Bit-Zuordners (13A) übersteigen, der zweite Bit-Zuordner (13B) danach Bit-Zuordnungs-Abschluß-Informationen zu dem ersten Bit-Zuordner (13A) ausgibt und der zweite Bit-Zuordner (13B) Bit-Verhältnis-Informationen basierend auf den Bit-Zuordnungs-Abschluß-Informationen erzeugt.

5. Vorrichtung zum Codieren, die Maskierungs-Charakteristika von Kanälen für eine Bit-Zuordnung verwendet, nach einem der vorhergehenden Ansprüche, wobei die Bit-Verhältnis-Informationen basierend auf der Anzahl von Bits bestimmt werden, die für eine Bit-Zuordnung durch den bestimmten Kanal verwendet werden, wo die Bit-Zuordnung am frühesten abgeschlossen worden ist.

6. Vorrichtung zum Decodieren, die Maskierungs-Charakteristika von Kanälen für eine Bit-Zuordnung verwendet, um eine codierte und multiplexierte Eingabe-Audio-Bit-Folge von zwei Kanälen in deren jeweiligen Kanälen zu verteilen und um die sich ergebende, verteilte Audio-Bit-Folge zu decodieren, wobei die Vorrichtung zum Decodieren **gekennzeichnet ist durch**:
einen First-in-First-out-Speicher (21) zum Speichern einer Bit-Folge, in der extern zugeführte Zwei-Kanal-Audio-Daten kombiniert werden und gespeicherte Daten ausgegeben werden, gemäß einem Schreib-Freigabe-Signal und einem Lese-Freigabe-Signal;
einen ersten Digital-Signal-Prozessor (22) zum Erzeugen eines Steuersignals zum Steuern einer Leseoperation **durch** Erfassen eines Unterbrechungs-Signals, zugeführt von dem First-in-First-out-Speicher (21), und zum Aufnehmen der Zwei-Kanal-Audio-Bit-Folge, gelesen von dem First-in-First-out-Speicher (21), um nurAudio-Daten eines ersten Kanals zu decodieren;
eine Steuerlogikeinrichtung (23) zum Zuführen des Lese-Freigabe-Signals zu dem First-in-First-out-Speicher (21) gemäß dem Steuersignal, zugeführt von dem ersten Digital-Signal-Prozessor (22); und
einen zweiten Digital-Signal-Prozessor (24) zum Aufnehmen von zweiten Kanal-Audio-Daten, die von den ersten Kanal-Audio-Daten **durch** den ersten Digital-Signal-Prozessor (22) separiert worden sind, und zum Decodieren der aufgenommenen zweiten Kanal-Audio-Daten.

7. Vorrichtung zum Decodieren, die Maskierungs-Charakteristika von Kanälen für eine Bit-Zuordnung verwendet, gemäß Anspruch 6, wobei der First-in-First-out-Speicher (21) das Unterbrechungs-Signal ausgibt, sobald die Eingabe-Audio-Daten vollständig darin aufgezeichnet sind.

8. Vorrichtung zum Decodieren, die Maskierungs-Charakteristika von Kanälen für eine Bit-Zuordnung verwendet, nach Anspruch 6 oder 7, wobei der erste Digital-Signal-Prozessor (22) Bit-Verhältnis-Informationen zwischen den Kanälen von der Audio-Bit-Folge von dem First-in-First-out-Speicher (21) erfaßt und die jeweiligen Kanal-Audio-Daten davon basierend auf den erfaßten Bit-Verhältnis-Informationen separiert.

9. Verfahren zum Codieren, das Maskierungs-Charakteristika von Kanälen für eine Bit-Zuordnung verwendet, um digital abgetastete Audio-Rahmen-Signale von mindestens zwei Kanälen zu codieren, wobei das Verfahren zum Codieren die allgemeinen Schritte einer Bandfilterung der Signale für die zwei Kanäle, Zuordnen von Bits und Quantisieren basierend auf der zugeordneten Zahl von Bits umfaßt, und wobei das Verfahren genauer durch die folgenden, spezifischen Schritte **gekennzeichnet** ist:
Aufnehmen eines Eingabe-Audio-Signals des ersten Kanals, Unterteilen des Eingabe-Audio-Signals des ersten Kanals in in vorbestimmter Frequenz unterteilte Bänder, um ein in der Frequenz unterteiltes Signal des ersten Kanals auszugeben, und Berechnen eines ersten Maskierungs-Schwellwerts;
Aufnehmen eines Eingabe-Audio-Signals des zweiten Kanals, Unterteilen des Eingabe-Audio-Signals des zweiten Kanals in in vorbestimmter Frequenz unterteilte Bänder, um ein in der Frequenz unterteiltes Signal des zweiten Kanals auszugeben, und Berechnen eines zweiten Maskierungs-Schwellwerts;
Berechnen eines Maskierungs-Rausch-Verhältnisses und erneutes Berechnen von überprüften Maskierungs-Rausch-Verhältnissen, die sich aus einer progressiven Bit-Zuordnung für jedes der in der Frequenz unterteilten Bänder des ersten Kanals und für jedes der in der Frequenz unterteilten Bänder des zweiten Kanals ergeben, und Vergleichen der berechneten Maskierungs-Rausch-Verhältnisse mit dem ersten Maskierungs-Schwellwert und dem zweiten Maskierungs-Schwellwert für jedes in der Frequenz unterteilte Band des jeweiligen ersten und zweiten Kanals;
Erfassen, wenn jedes Frequenz-Teilungs-Band eines gegebenen Kanals einen Zustand erreicht hat, in dem das Maskierungs-Rausch-Verhältnis in jedem bit-mäßig zugeordneten Frequenz-Teilungs-Band einen Maskierungs-Schwellwert basierend auf dem Ergebnis des vorstehenden Vergleichschritts übersteigt;
für den Kanal, in dem am frühesten erfaßt worden ist, daß der vorstehend angegebene Zustand erreicht worden ist, Zuordnen solcher verbleibender Bits, die nicht bereits zu dem anderen Kanal zugeordnet worden sind, in dem der vorstehend erwähnte Zustand noch nicht erreicht worden ist, und Erzeugen von Bit-Zuordnungs-Informationen entsprechend zu jedem Kanal und von Bit-Verhältnis-Informationen zwischen den Kanälen;
Aufnehmen der Bit-Zuordnungs-Informationen entsprechend jedem Kanal und
Quantisieren der in der Frequenz unterteilten Signale jedes Kanals, um quantisierte Kanalsignale auszugeben; und
Multiplexieren: (i) der Bit-Verhältnis-Informationen; (ii) der Bit-Zuordnungs-Abschluß-Informationen von dem Kanal, der den vorstehend angegebenen Zustand am frühesten erreicht hat; und (iii) der quantisierten Kanal-Signale.

10. Verfahren zum Codieren, das Maskierungs-Charakteristika von Kanälen für eine Bit-Zuordnung verwendet, nach Anspruch 9, wobei der Berechnungs- und Vergleichsschritt ein wiederholtes Durchführen der Schritte aufweist von:
Durchführen einer Bit-Zuordnung in Bezug auf das in der bestimmten Frequenz unterteilte Band, das das niedrigste Maskierungs-Rausch-Verhältnis besitzt; und Vergleichen des Maskierungs-Rausch-Verhältnisses entsprechend des in der Frequenz unterteilten Bands, für das eine Bit-Zuordnung mit dem Maskierungs-Schwellwert des entsprechenden Kanals durchgeführt worden ist.

11. Verfahren zum Codieren, das Maskierungs-Charakteristika von Kanälen für eine Bit-Zuordnung verwendet, nach Anspruch 9 oder 10, wobei der die Informationen erzeugende Schritt die Bit-Zuordnungs-Informationen zu dem Zeitpunkt erzeugt, zu dem eine Bit-Zuordnung für die zwei Kanäle durchgeführt worden ist.

12. Verfahren zum Codieren, das Maskierungs-Charakteristika von Kanälen für eine Bit-Zuordnung verwendet, nach Anspruch 9, wobei die Bit-Verhältnis-Informationen ein Verhältnis zwischen der Anzahl von zugeordneten Bits des ersten Kanals und der Anzahl von zugeordneten Bits des zweiten Kanals zu dem Zeitpunkt darstellen, zu dem die Bit-Zuordnung in Bezug auf die zwei Kanäle für den Audio-Rahmen durchgeführt worden ist.

## Revendications

1. Dispositif de codage, qui utilise les caractéristiques de masquage de canaux pour une affectation de bits afin de coder des signaux de trame audio échantillonnés numériquement d'au moins deux canaux, ledit dispositif de codage comprenant des premier et second groupes de filtres, des premier et second moyens de calcul de seuil, des moyens d'affectation de bits et des premier et second moyens de quantification, le dispositif étant **caractérisé par** les caractéristiques suivantes:
le premier groupe de filtres comprend un premier groupe de filtres de bande divisée (11A) pour recevoir un premier signal audio d'entrée du premier canal, diviser le signal audio d'entrée du premier canal en des bandes divisées en fréquences prédéterminées et délivrer un signal divisé en fréquences du premier canal;
les premiers moyens de calcul de seuil comprennent des premiers moyens (12A) de calcul d'une valeur de seuil servant à recevoir à la fois le signal audio d'entrée du premier canal et le signal divisé en fréquence du premier canal dudit premier groupe de filtres de bande divisée (11A), et calculer une première valeur de seuil de masquage;
le second groupe de filtres comprend un second groupe de filtres de bande divisée (11B servant à recevoir un signal audio d'entrée du second canal, diviser le signal audio d'entrée du second canal en des bandes divisées en fréquence prédéterminées et délivrer un signal divisé en fréquence du second canal;
les seconds moyens de calcul de seuil comprennent un second moyen (12B) de calcul de a valeur de seuil pour recevoir à la fois le signal audio d'entrée du second canal et le signal divisé en fréquence du second canal dudit second groupe de filtres de bande divisée (11B), et calculer une seconde valeur de seuil de masquage;
des moyens (13A, 13B) d'affectation de bits sont agencés pour
(i) exécuter une affectation de bits pour les signaux divisés en fréquence respectifs des premier et second canaux;
(ii) recevoir les première et seconde valeurs de seuil respectives de seuil de masquage;
(iii) détecter un rapport masquage/bruit des premier et second canaux respectifs de manière à contrôler des sous-bandes des premier et second signaux divisés en fréquence;
(iv) exécuter une affectation de bits à des sous-bandes respectives des premier et second signaux divisés en fréquence, jusqu'à ce que le rapport masque/bruit de toutes les sous-bandes de l'un desdits premier et second signaux respectifs divisés en fréquence dépassent sa première ou seconde valeurs respectives de seuil de masquage,
(v) utiliser les bits restants, qui n'ont pas été utilisés lors du dépassement de la valeur de seuil de masquage dudit premier signal divisé en fréquence pour une affectation de bits à l'autre desdits premier et second signaux divisés en fréquence; et
(vi) produire une information d'affectation de bits correspondant à chaque canal et la formation du rapport de bits entre les canaux;
les premiers moyens de quantification (14A) sont agencés de manière à recevoir le signal de sortie divisé en fréquence du premier canal délivré par ledit premier groupe de filtres de bande divisée (11A) et pour quantifier le signal reçu divisé en fréquence du premier canal en réponse à l'information d'affectation de bits desdits moyens d'affectation de bits (13A, 13B) pour délivrer un signal de premier canal quantifié;
les seconds moyens de quantification (14B) sont agencés de manière à recevoir le signal de sortie divisé en fréquence du second canal délivré par ledit second groupe de filtres de bande divisée (11B) et pour quantifier le signal reçu divisé en fréquence du second canal en réponse à l'information d'affectation de bits desdits moyens d'affectation de bits (13A, 13B) pour délivrer un signal de second canal quantifié; et
des moyens de multiplexage (14) sont prévus pour multiplexer les signaux délivrés par lesdits premier et second moyens de quantification (14A, 14B) et l'information d'affectation de bits et l'information de rapport des bits à partir desdits moyens d'affectation (13A, 13B) et délivrer le signal multiplexé résultant.

2. Dispositif de codage utilisant des caractéristiques de masquage de canaux pour une affectation de bits selon la revendication 1, dans lequel lesdits moyens d'affectation de bits (13A, 13B) affectent des bits aux bandes divisées respectives des premier et second canaux en utilisant un nombre combiné total prédéterminé de bits pour les signaux divisés en fréquence des premier et second canaux d'une trame audio.

3. Dispositif de codage utilisant des caractéristiques de masquage de canaux pour une affectation de bits selon la revendication 1 ou 2, dans lequel lesdits moyens d'affectation de bits (13A, 13B) comprennent:
une première unité d'affectation de bits (13A), qui affecte des bits selon un mode à priorité, de manière à affecter tout d'abord des bits aux bandes de fréquences divisées particulières présentant le rapport masquage/bruit le plus faible parmi les bandes de fréquence divisées du premier canal, des rapports masquage/bruit révisés en rapport avec les bandes de fréquences divisées auxquelles sont affectés des bits et compare les rapports masquage/bruit révisés et calculés à la première valeur de seuil de masquage;
une seconde unité d'affectation de bits (13B), qui affecte des bits selon un mode à priorité, de manière à affecter tout d'abord des bits aux bandes de fréquences divisées particulière présentant le rapport masquage/bruit le plus faible parmi les bandes de fréquences divisées du second canal, des rapports masquage/bruit révisés en rapport avec les bandes de fréquences divisées auxquelles sont affectés des bits et compare les rapports masquage/bruit révisés et calculés à la second valeur de seuil de masquage,
dans lequel lorsque ladite première unité d'affectation de bits (13A) affecte des bits en rapport avec toutes les bandes de fréquences divisées du premier canal de manière à obtenir des rapports masquage/bruit pour chaque bande de fréquences divisée, qui dépasse la première valeur de seuil de masquage avant que ne le fasse ladite seconde unité d'affectation de bits (13B), ladite première unité d'affectation de bits (13B) délivrant ensuite une information d'achèvement de l'affectation de bits à ladite seconde unité d'affectation de bits (13B), et ladite seconde unité d'affectation de bits (13B) produisant une information de rapport des bits sur la base de l'information d'achèvement de l'affectation de bits.

4. Dispositif de codage, . utilisant des caractéristiques de masquage de canaux pour une affectation de bits selon la revendication 3, dans lequel, lorsque ladite seconde unité d'affectation de bits (13B) affecte des bits en rapport avec des bandes de fréquences divisées du second canal de manière à obtenir des rapports masquage/bruit qui dépassent la seconde valeur de seuil de masquage avant qu'elle ne le fasse ladite première unité d'affectation de bits (13B), ladite seconde unité d'affectation de bits (13B) délivre ensuite une information d'achèvement de l'affectation de bits à ladite première unité d'affectation de bits (13A), et ladite seconde unité d'affectation de bits (13B) produit une information sur le rapport de bits sur la base de l'information d'achèvement de l'affectation de bits.

5. Dispositif de codage utilisant des caractéristiques de masquage de canaux pour une affectation de bits selon l'une quelconque des revendications précédentes, dans lequel ladite information du rapport de bits est déterminée sur la base du nombre de bits qui sont utilisés pour une affectation de bits sur le canal particulier, où l'affectation de bits a été réalisée en premier.

6. Dispositif de codage utilisant des caractéristiques de masquage de canaux pour une affectation de bits afin de distribuer un flux binaire audio d'entrée codé multiplexé de deux canaux dont leurs canaux respectifs et décoder le flux audio binaire décodé résultant, ledit dispositif de décodage étant **caractérisé par**:
une mémoire premier entré - premier sorti (21) pour mémoriser un flux binaire, dans lequel des données audio de deux canaux, délivrés de l'extérieur sont combinées et des données mémorisées sont délivrées, selon un signal d'autorisation d'écriture et un signal d'autorisation de lecture;
un premier processeur de signaux numériques (22) comprenant un signal de commande servant à commander une opération de lecture par détection d'un signal d'interruption délivré par ladite mémoire premier entré - premier sorti (22) et pour recevoir le flux binaire audio à deux canaux lu à partir de ladite mémoire premier entré - premier sortie (21) pour décoder uniquement des données audio d'un premier canal;
des moyens logiques de commande (23) pour délivrer le signal d'autorisation de lecture à ladite mémoire premier entré - premier sorti (21) en fonction du signal de commande délivré par ledit processeur de signaux (22) et
un second processeur de signaux numériques (24) pour recevoir des données audio du second canal, qui ont été séparées des données audio du premier canal par ledit premier processeur de signaux numérique (22) et pour détecter les données audio reçues du second canal.

7. Dispositif de décodage utilisant des caractéristiques de masquage de canaux pour une affectation de bits selon la revendication 6, selon lequel ladite mémoire premier entré - premier sorti (21) délivre ledit signal d'interruption dès que les données audio d'entrée sont complètement enregistrées dans cette mémoire.

8. Dispositif de décodage utilisant des caractéristiques de masquage de canaux pour une affectation de bits selon la revendication 6 ou 7, dans lequel ledit premier processeur de signaux numériques (22) détecte une information sur le rapport de bits entre les canaux provenant du flux binaire audio, à partir de ladite mémoire premier entré - premier sorti (21) et sépare les données audio de canaux respectifs de cette information sur la base de l'information détectée de rapport des bits.

9. Procédé de codage qui utilise des caractéristiques de masquage de canaux pour une affectation de bits de manière à coder des signaux de trame audio et échantillonnés numériquement d'au moins deux canaux, ledit procédé de codage incluant les étapes générales consistant en un filtrage de bande des signaux des deux canaux, d'affectation de bits et une quantification basée sur les bits de nombres affectés, de façon plus détaillée, le procédé étant **caractérisé par** les étapes spécifiques suivantes consistant à:
recevoir un signal audio d'entrée du premier canal, diviser le signal audio d'entrée du premier canal en des bandes prédéterminées divisées en fréquence pour délivrer un signal divisé en fréquence du premier canal et calculer une première valeur de seuil de masquage;
recevoir un signal audio d'entrée du second canal, diviser le signal audio d'entrée du second canal en des bandes prédéterminées divisées en fréquence pour délivrer un signal divisé en fréquence du second canal, et calculer une seconde valeur de seul de masquage;
calculer des rapports masquage/bruit et recalculer des rapports masquage/bruit divisés résultant d'une affectation progressive de bits pour chacune des bandes divisées en fréquence du premier canal et pour chacune des bandes divisées en fréquence du second canal, et comparer les rapports masquage/bruit calculés, à la première valeur de seuil de masquage et à la seconde valeur de seuil de masquage pour chaque bande divisée en fréquence des premier et second canaux respectifs;
détecter le moment où chaque bande divisée en fréquence d'un canal donné à la condition dans laquelle le rapport masquage/bruit, dans lequel chaque bande divisée en fréquence, à laquelle des bits sont affectés, dépasse une valeur de seuil de masquage que la base du résultat de l'étape de comparaison précédente;
pour le canal, dans lequel il a été détecté de la manière la plus précoce que la condition mentionnée précédemment a été atteinte, l'affectation des bits restants, qui n'ont pas déjà été affectés à l'autre canal dans lequel ladite condition mentionnée précédemment n'a pas encore été atteinte, et la production d'une information d'affectation de bits correspondant à chaque canal et à l'information de rapport des bits entre les canaux;
recevoir l'information d'affectation de bit correspondant à chaque canal et quantifier les signaux divisés en fréquence de chaque canal pour délivrer des signaux de canaux quantifiés de sortie; et
multiplexer: (i) l'information du rapport sur les bits; (ii) l'information d'achèvement d'affectation des bits à partir du canal qui a atteint de la manière la plus précoce la condition mentionnée précédemment; et (iii) les signaux de canaux quantifiés.

10. Procédé de codage utilisant des caractéristiques de masquage de canaux pour une affectation de bits selon la revendication 9, selon lequel ladite étape de calcul et de comparaison comprend l'exécution répétée des étapes consistant à:
exécuter une affectation de bits en rapport avec la bande particulière divisée en fréquence possédant le rapport masquage/bruit le plus faible; et
comparer le rapport masquage/bruit correspondant à la bande divisée en fréquence, pour laquelle une affectation de bits a été exécutée avec la valeur de seuil de masquage du canal correspondant.

11. Procédé de codage utilisant des caractéristiques de masquage de canaux pour une affectation de bits selon la revendication 9 ou 10, selon lequel ladite étape de production d'une information produit ladite information d'affectation de bits au moment où l'affectation de bits a été réalisée pour les deux canaux.

12. Procédé de codage utilisant des caractéristiques de masquage de canaux pour une affectation de bits selon la revendication 9, selon lequel ladite information sur le rapport des bits représente un rapport entre le nombre de bits affectés du premier canal et le nombre de bits affecté du second canal au moment où l'affectation des bits a été réalisée en rapport avec les deux canaux de la trame audio.
